# EUROPÄISCHE PATENTSCHRIFT

(11) **EP 2 489 443 B1**
(45) Veröffentlichungstag und Bekanntmachung des Hinweises auf die Patenterteilung: **01.06.2016**
(21) Anmeldenummer: 12000460.1
(22) Anmeldetag: 26.01.2012
(51) Int. Cl.: B08B 15/04, B23Q 11/00, B24B 55/10

(54) **Schlauch-Kupplungsvorrichtung**
Hose coupling device
Dispositif d'accouplement de tuyau flexible

(30) Priorität: 17.02.2011 DE 102011011383
(43) Veröffentlichungstag der Anmeldung: 22.08.2012
(73) Patentinhaber: Festool GmbH, 73240 Wendlingen am Neckar (DE)
(72) Erfinder: Eisenmann, Philipp, 72669 Unterensingen (DE); Randecker, Andreas, 72581 Dettingen an der Ems (DE)
(74) Vertreter: Patentanwälte Bregenzer und Reule Partnerschaftsgesellschaft mbB

(56) Entgegenhaltungen:
- WO-A1-2006/115449
- US-A- 6 131 390

## Beschreibung

Die Erfindung betrifft eine Schlauch-Kupplungsvörrichtung zum Ankuppeln eines eine Druckluft-Leitung enthaltenden Schlauchs an einen Maschinen-Anschluss einer pneumatischen Hand-Werkzeugmaschine, gemäß dem Oberbegriff des Anspruchs 1.

Eine derartige Schlauch-Kupplungsvorrichtung ist beispielesweise in US 6131390 A erläutert.

Eine weitere Schlauch-Kupplungsvorrichtung geht beispielsweise aus DE 295 15 285 U1 hervor: Der Schlauch ist beispielsweise als eine Art Mehrmedienschlauch ausgestaltet, der einen inneren, die Druckluftleitung aufweisenden Druckluft-Schlauch, einen Abluftschlauch, in dem der Druckluft-Schlauch geführt ist, sowie einen äußeren, zur Staubabfuhr von der Hand-Werkzeugmaschine weg dienenden Staubabfuhr-Schlauch aufweist. Die drei Schläuche sind konzentrisch, das heißt, die entsprechenden Haltemittel der Schlauch-Kupplungsvorrichtung sind ebenfalls konzentrisch ausgestaltet, so dass zum einen Druckluft vom Schlauch in Richtung der Hand-Werkzeugmaschine, zum andern aber auch vom Druckluft-Motor der Hand-Werkzeugmaschine wegströmende Abluft sowie vom Werkzeug weggeführte, mit Staub beladene Staubluft abgeführt werden können.

Da der Schlauch im Prinzip drei Schläuche enthält, nämlich einen äußeren Staubluft-Schlauch, einen mittleren AbluftSchlauch sowie einen zentralen Druckluft-Schlauch, ist er verhältnismäßig biegesteif, was die Handhabung der mit dem Schlauch beziehungsweise der Schlauchanordnung versehenen Hand-Werkzeugmaschine schwer macht. Die Bewegungsfreiheit ist eingeschränkt.

Es ist daher die Aufgabe der vorliegenden Erfindung, eine Schlauch-Kupplungsvorrichtung sowie eine damit ausgestattete Hand-Werkzeugmaschine mit einfacher, leichter Bedienbarkeit bereitzustellen.

Zur Lösung der Aufgabe ist eine Schlauch-Kupplungsvorrichtung gemäß der technischen Lehre des Anspruchs 1 vorgesehen.

Ein Grundgedanke der Erfindung ist es, dass die von der Hand-Werkzeugmaschine beziehungsweise deren pneumatischem Motor erzeugte Abluft gezielt vom Maschinengehäuse weggeführt wird, nämlich durch die erfindungsgemäße Schlauch-Kupplungsvorrichtung. Die Abluft wird also vom Maschinen-Anschluss weggeführt und strömt durch den Abluft-Auslass der Schlauch-Kupplungsvorrichtung vom Maschinengehäuse weg. Da der Maschinen-Anschluss in der Regel an einem Handgriffbereich oder einer Handgriffpartie des Maschinengehäuses der Hand-Werkzeugmaschine angeordnet ist, strömt die Abluft, die aus der Schlauch-Kupplungsvorrichtung ausströmt, an einem weit vom Arbeitsbereich der Hand-Werkzeugmaschine entfernten Bereich, so dass es beispielsweise nicht zu unerwünschten Staubaufwirblungen kommt, wenn, wie im bevorzugten Ausführungsbeispiel der Fall, die Hand-Werkzeugmaschine durch ein Schleifgerät oder Poliergerät gebildet ist.

Zugleich ist eine Abwärtskompatibilität.-gegeben, da nämlich die Schlauch-Kupplungsvorrichtung gemäß der vorliegenden Erfindung zweckmäßigerweise auch-mit einer Hand-Werkzeugmaschine kompatibel ist, wie sie im eingangs erwähnten Gebrauchsmuster DE 295 15 285 U1 erläutert ist.

Wie gesagt, kann die Schlauch-Kupplungsvorrichtung zweckmäßigerweise an einem pneumatischen Schleifgerät oder Poliergerät zum Einsatz kommen, wobei selbstverständlich auch andere pneumatische Hand-Werkzeugmaschinen mit der Schlauch-Kupplungsvorrichtung ausgestattet werden können, zum Beispiel Schraubgeräte oder dergleichen.

Bevorzugt hat die Schlauch-Kupplungsvorrichtung einen Schalldämpfer oder einen Filter (oder beides), über den die Abluft aus dem Kupplungsgehäuse ausströmt. Beispielsweise ist der Schalldämpfer im oder am Abluftkanal angeordnet. Es ist auch möglich, dass der Schalldämpfer direkt vor dem Abluft-Auslass oder hinter dem Abluft-Auslass angeordnet ist, so dass jedenfalls die aus der Schlauch-Kupplungsvorrichtung beziehungsweise deren Kupplungsgehäuse ausströmende Abluft schallgedämpft und/oder gereinigt wird. Ein Filter kann beispielsweise zur Abscheidung von Öl aus der Abluft dienen.

Bevorzugt hat auch die Hand-Werkzeugmaschine einen integrierten Schalldämpfer, zum Beispiel unmittelbar an einem Auslass des pneumatischen Motors, so dass nicht nur ein, sondern zwei oder mehrere Schalldämpfer vorhanden sind.

An dieser Stelle sei bemerkt, dass selbstverständlich die Schlauch-Kupplungsvorrichtung auch mehrere Abluftöffnungen und mehrere Abluftkanäle aufweisen kann. Vorteilhaft sind auch mehrere Abluft-Einlässe bei der Schlauch-Kupplungsvorrichtung vorhanden, wenn entsprechend mehrere Maschinen-Abluft-Auslässe bei dem Maschinen-Anschluss vorhanden sind.

Der Schalldämpfer oder der Filter ist zweckmäßigerweise von der Druckluft-Leitung der Schlauch-Kupplungsvorrichtung durchsetzt, beispielsweise zentral, oder aber auch an einem Randbereich. Beispielsweise ist der Schalldämpfer oder Filter ein Ring-Schalldämpfer oder ein Ringfilter. Der Ring kann beispielsweise von der Abluft von radial innen nach radial außen (aber auch umgekehrt) durchströmt werden. Weiterhin ist es möglich, dass der Ring stirnseitig von der Abluft angeströmt wird und dass die Abluft stirnseitig aus dem Ring wieder ausströmt.

Zur Führung der Abluft von einem Gehäuse der Hand-Werkzeugmaschine weg können folgende Maßnahmen vorteilhaft sein:
Beispielsweise ist die Abluftöffnung in Richtung des Schlauches orientiert. Dadurch strömt die Abluft vom Maschinengehäuse weg in Richtung des Schlauches, das heißt vom Arbeitsbereich weg.

Der Abluftkanal kann zweckmäßigerweise entlang eines vorderen, an der Schlauch-Kupplungsvorrichtung angeordneten Abschnittes des Schlauches verlaufen. Somit strömt auch in diesem Fall die Abluft zweckmäßigerweise nicht in Richtung eines Handgriffes der Hand-Werkzeugmaschine oder eines Arbeitsbereiches derselben, sondern beispielsweise an der Hand des Bedieners vorbei.

Weiterhin ist es möglich, dass das Kupplungsgehäuse einen ringförmigen, von dem Schlauch durchsetzten Abluftführungsabschnitt aufweist. Dieser Abluftführungsabschnitt kann einstückig mit dem Kupplungsgehäuse sein. Es ist aber auch möglich, dass der Abluftführungsabschnitt beispielsweise durch eine Tülle oder einen Knickschutz gebildet wird, der am Kupplungsgehäuse der Schlauch-Kupplungsvorrichtung angeordnet ist, oder an einer Tülle oder einem Knickschutz angeordnet ist.

Bevorzugt ist der Abluftführungsabschnitt flexibel, insbesondere biegeflexibel, und macht die Bewegungen des Schlauches zumindest teilweise mit.

Der Schalldämpfer oder der Filter können zweckmäßigerweise als ein auswechselbares Modul oder eine auswechselbare Patrone ausgestaltet sein. Somit können der Schalldämpfer oder der Filter ausgewechselt werden, beispielsweise wenn sie mit Schmutz, Öl oder dergleichen beladen sind.

Weiterhin ist es vorteilhaft, wenn der Schalldämpfer oder der Filter ein Gitter umfassen, das von einem flexiblen Gewebe oder Gewirk gehalten wird. Selbstverständlich kann das Gitter auch ein Bestandteil des Kupplungsgehäuses oder eines Halters für den Schalldämpfer oder den Filter bilden.

Bevorzugt ist auch ein Haltekörper, der lösbar an dem Kupplungsgehäuse befestigbar ist und ein flexibles Gewebe oder Gewirk (oder beides) hält.

Weiterhin ist es zweckmäßig, wenn der Schalldämpfer oder der Filter in einem Innenraum des Kupplungsgehäuses geschützt angeordnet sind.

In der Zeichnung werden zwei unterschiedliche Ausführungsbeispiele erfindungsgemäßer Schlauch-Kupplungsvorrichtungen erläutert. Eine davon hat einen Staubluft-Verschluss, die andere einen Staubluftkanal, wobei beide mit einem Maschinen-Staubluft-Auslass des Maschinen-Anschlusses kommunizieren beziehungsweise dort angeordnet sind, wenn die Schlauch-Kupplungsvorrichtung mit dem Maschinen-Anschluss verbunden ist. Der Staubluft-Verschluss ist dann vor dem Maschinen-Staubluft-Auslass des Maschinen-Anschlusses angeordnet, aus dem die mit Staub beladene Staubluft strömt. Entsprechend ist auch der Staubluft-Auslass vor dem Maschinen-Staubluft-Auslass angeordnet, wenn die Schlauch-Kupplungsvorrichtung mit dem Maschinen-Anschluss verbunden ist. Somit ist also der maschinenseitige Staubluft-Auslass entweder verschlossen oder mit einem Staubluftkanal verbunden.

Der Schlauch weist zweckmäßigerweise einen äußeren Schlauchmantel und einen in einem Innenraum des Schlauchmantels angeordneten Druckluft-Schlauch auf, in welchem die Druckluft-Leitung ausgebildet ist. Innerhalb des Schlauchmantels wird die Staubluft geführt. Der Druckluft-Anschluss der Schlauch-Kupplungsvorrichtung ist zweckmäßigerweise in einem Innenraum einer zum Anschluss des Schlauchmantels vorgesehenen Schlauchaufnahme der Schlauch-Kupplungsvorrichtung angeordnet. Beispielsweise kann der Schlauchmantel auf die Schlauchaufnahme aufgesteckt werden. Zweckmäßig ist es, wenn die Schlauchaufnahme als eine Ausnehmung oder Vertiefung ausgestaltet ist, jedenfalls wenn der Schlauchmantel in die Schlauchaufnahme eingesteckt werden kann.

Der Abluftkanal des Kupplungsgehäuses als Ganzes oder auch ein Abschnitt des Abluftkanals sind zweckmäßigerweise an dem Staubluftkanal vorbeiführend angeordnet. Beispielsweise verläuft ein Abschnitt des Abluftkanals oder der Abluftkanal als solcher von radial innen nach radial außen am Staubluftkanal der Schlauch-Kupplungsvorrichtung vorbei.

Auf diesem Weg ist auch eine gewisse Labyrinthwirkung erzielbar, das heißt, eine zusätzliche Schalldämpfung der Abluft durch eine labyrinthartige, jedenfalls gewinkelte Führung innerhalb des Kupplungsgehäuses der erfindungsgemäßen Schlauch-Kupplungsvorrichtung.

Zweckmäßigerweise sind bei einer erfindungsgemäßen Schlauch-Kupplungsvorrichtung auch Verwirbelungsstrukturen, Labyrinthstrukturen oder dergleichen zur Führung der Abluft A beziehungsweise deren Verwirbelung vorgesehen.

Der Druckluft-Anschluss und der Staubluft-Einlass des Staubluftkanals sind zweckmäßigerweise konzentrisch. Bevorzugt ist es auch, wenn der Druckluft-Anschluss und die Abluftöffnung konzentrisch sind.

Bevorzugt hat der Druckluft-Anschluss ein Ventilglied, das durch in der Druckluft-Leitung anstehenden Druck (der Druckluft) verschließbar ist. Somit wird der Druckluft-Anschluss der Schlauch-Kupplungsvorrichtung durch die anstehende Druckluft verschlossen. Das Ventilglied ist durch eine den Maschinen-Druckluft-Einlass aufweisende Partie des Maschinen-Anschlusses öffenbar.

Die Haltemittel können beispielsweise ein Schraubgewinde und/oder Bajonettkonturen zur Verbindung mit Gegen-SchraubKonturen oder Gegen-Bajonettkonturen der Gegenhaltemittel des Maschinen-Anschlusses aufweisen. Selbstverständlich ist auch eine Klauenverbindung ohne weiteres möglich. Weiterhin ist eine Klemmverbindung zwischen der Schlauch-Kupplungsvorrichtung und dem Maschinen-Anschluss möglich. Bevorzugt umfassen die Haltemittel mindestens einen Ring, der drehbar am Kupplungsgehäuse gelagert ist. Somit kann die jeweilige Drehposition des Schlauches beziehungsweise der Ein- und Auslässe der Schlauch-Kupplungsvorrichtung relativ zum Maschinen-Anschluss leicht eingestellt werden. Es werden lediglich noch die Haltemittel verstellt beziehungsweise der Ring gedreht.

Die Schlauch-Kupplungsvorrichtung kann lösbar mit dem Schlauch verbunden sein. Bevorzugt ist jedoch eine Baueinheit, bei der der Schlauch mit der Schlauch-Kupplungsvorrichtung fest verbunden ist.

Bevorzugt hat der Schlauch eine Abzweigung in einem von der Schlauch-Kupplungsvorrichtung entfernten Bereich, an der die Druckluft-Leitung aus einem Innenraum des Schlauches herausgeführt ist. Der "Restschlauch", beispielsweise der vorgenannte Schlauchmantel, hat dann einen Anschluss zum Anschluss beispielsweise an einen Staubsauger.

Die Erfindung betrifft auch eine mit einer Schlauch-Kupplungsvorrichtung nach der Erfindung ausgestattete Hand-Werkzeugmaschine.

Nachfolgend werden Ausführungsbeispiele der Erfindung anhand der Zeichnung erläutert. Es zeigen:

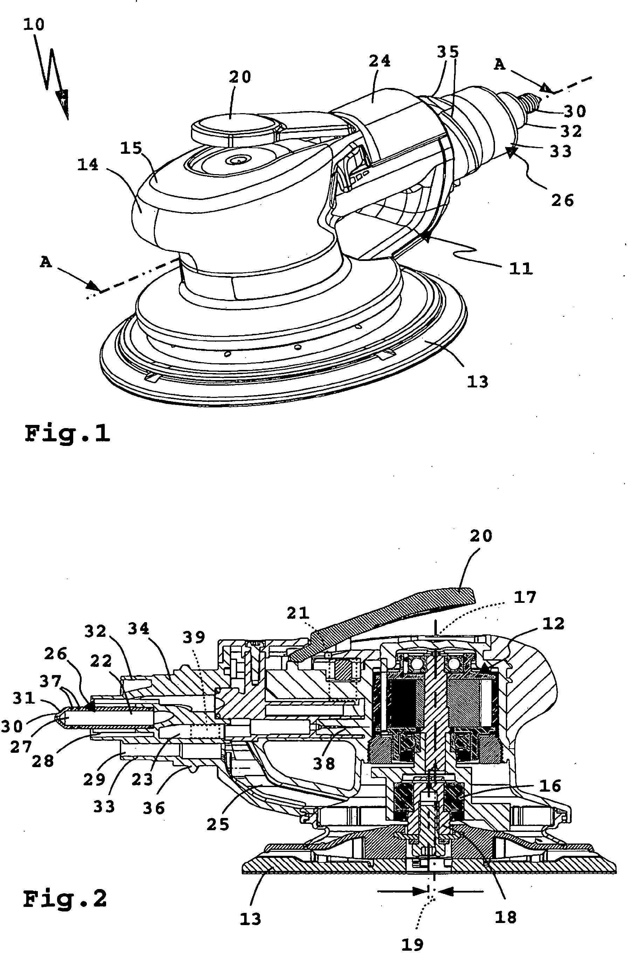

- Figur 1: eine perspektivische Schrägansicht einer erfindungsgemäßen Hand-Werkzeugmaschine, die in
- Figur 2: in einem Längsschnitt entlang einer Schnittlinie A-A gemäß Figur 1 dargestellt ist,
- Figur 3: ein erstes Ausführungsbeispiel einer erfindungsgemäßen Schlauch-Kupplungsvorrichtung perspektivisch schräg von vorn,
- Figur 4: die Schlauch-Kupplungsvorrichtung gemäß Figur 3 im Längsschnitt entlang einer Schnittlinie B-B in Figur 3,
- Figur 5: ein zweites Ausführungsbeispiel einer erfindungsgemäßen Schlauch-Kupplungsvorrichtung, die in
- Figur 6: in einem Längsschnitt entlang einer Schnittlinie C-C in Figur 5 dargestellt ist.

Die in der Zeichnung dargestellte Hand-Werkzeugmaschine 10 ist beispielsweise ein Schleif- und/oder Poliergerät 11 mit einem pneumatischen Motor 12 zum Antreiben eines Werkzeugs 13, beispielsweise eines Teller-Werkzeugs. Das Werkzeug 13 ist an einer Unterseite eines Maschinengehäuses 14 drehbar angeordnet. Das Werkzeug 13 befindet sich an einem Motorabschnitt 15 des Maschinengehäuses 14, in dem der Motor 12, beispielsweise ein Lamellenmotor, aufgenommen ist. Eine Werkzeugaufnahme 18 hat bezüglich einer Motorachse 17 des Motors 12 eine Exzentrizität 19, so dass das Werkzeug 13 bezüglich der Motorachse 17 exzentrisch dreht. An einer Oberseite des Maschinengehäuses 14 ist ein Handgriff 20 angeordnet, mit dem ein Ventil 21 der Hand-Werkzeugmaschine 10 betätigbar ist, so dass Druckluft D in den Motor 12 einströmen kann und diesen antreibt. Die Druckluft D strömt über einen Druckluftkanal 22 zum Ventil 21. Aus dem Motor 12 ausströmende Abluft A strömt über einen Abluftkanal 23 vom Motor 12 weg. Der Druckluftkanal 22 und der Abluftkanal 23 verlaufen in einem Handgriffabschnitt 24 des Maschinengehäuses 14, der von einem Bediener ergriffen oder umgriffen werden kann. Unterhalb des Handgriffabschnitts 24 verläuft noch ein Staubluftkanal 25 zum Wegführen von mit Staub beladener Staubluft S vom Werkzeug 13 weg, das beispielsweise zum Durchlassen von Staubluft S in der Zeichnung nicht sichtbare Durchlässe hat, die von der Werkzeug-Unterseite zur -Oberseite eines Haltetellers des Werkzeugs 13 verlaufen und in den Staubluftkanal 25 ausmünden.

Hinten am Handgriffabschnitt 24 ist ein Maschinen-Anschluss 26 angeordnet, über den die Hand-Werkzeugmaschine mit Druckluft D versorgt werden kann und über den die Staubluft S und die Abluft A aus dem Maschinengehäuse 14 ausströmen können. Mithin führen also der Druckluftkanal 22, der Abluftkanal 23 sowie der Staubluftkanal 25 zum Maschinen-Anschluss 26, wo ein Maschinen-Druckluft-Einlass 27, ein Maschinen-Abluft-Auslass 28 sowie ein Maschinen-Staubluft-Auslass 29 vorhanden sind.

Von radial innen her gesehen ist dabei folgende Anordnung getroffen:
Der Maschinen-Druckluft-Einlass 27 ist an einer rohrförmigen Anschlusspartie 30 vorgesehen, die einen Betätigungsvorsprung 31 aufweist. Durch die Anschlusspartie 30, das heißt durch das Rohr hindurch, kann Druckluft D in die Hand-Werkzeugmaschine beziehungsweise den Druckluftkanal 22 einströmen.

Die Druckluft-Anschlusspartie 30 ist von einer Abluft-Anschlusspartie 32 umgeben, das heißt, die Anschlusspartien 30, 32 sind zueinander konzentrisch. Die Druckluft-Anschlusspartie 30 steht vor die Abluft-Anschlusspartie 32 vor. Der Maschinen-Druckluft-Einlass 27 und der Maschinen-Abluft-Auslass 28 sind konzentrisch zueinander.

Die beiden Anschlusspartien 30, 32 wiederum sind zu einer Staubluft-Anschlusspartie 33 konzentrisch, so das Staubluft S ringförmig oder jedenfalls unterhalb der Anschlusspartien 30, 32 aus dem Maschinengehäuse 14 ausströmen kann.

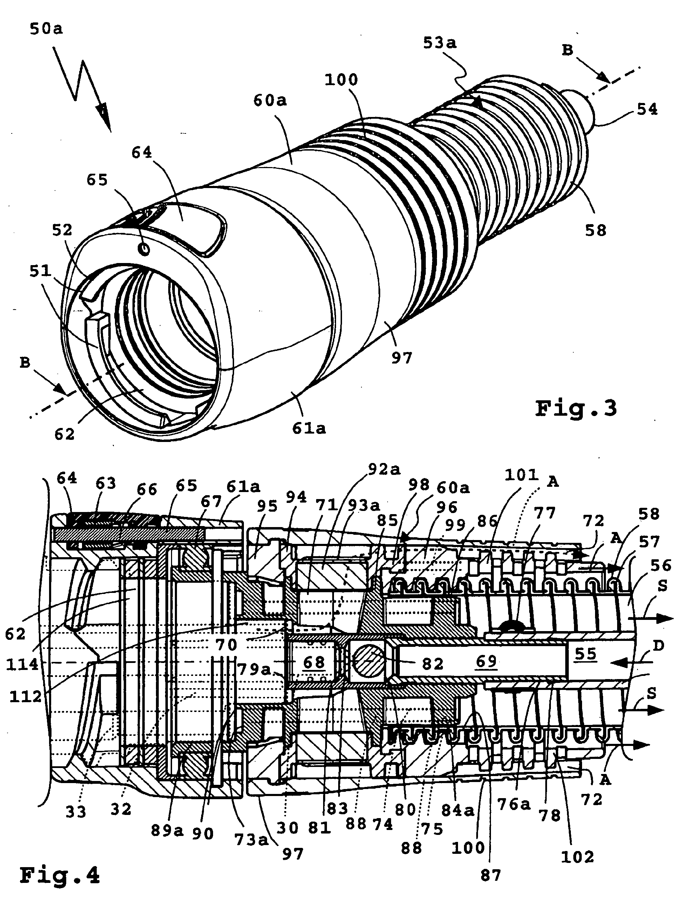

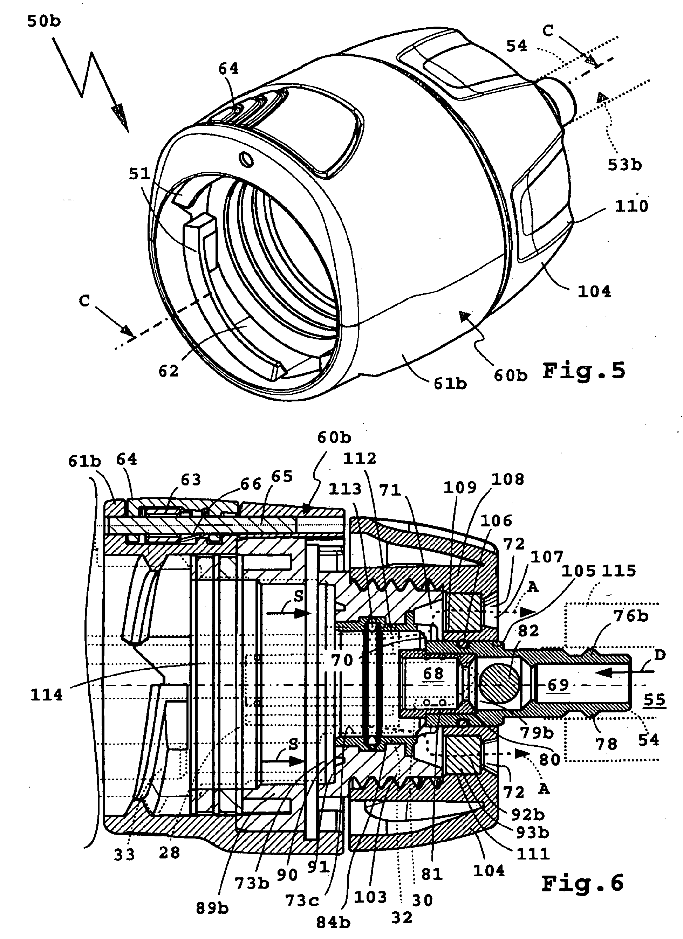

Die Anschlusspartien 30, 32, 33 sind im Innern eines Anschlusskörpers 34 vorgesehen, der einen Gegenhalt für die Schlauch-Kupplungsvorrichtungen 50a (Figuren 3, 4) oder 50b (Figuren 5, 6) bildet. Am rohrförmigen Anschlusskörper 34 sind beispielsweise Gegen-Bajonettkonturen 35 angeordnet, beispielsweise schraubenförmige Abschnitte, die Bestandteile von Gegenhaltemitteln 36 für Bajonettkonturen 52 von Haltemitteln 51 der Schlauch-Kupplungsvorrichtungen 50a, 50b bilden, die teilweise gleiche oder gleichartige Komponenten umfassen, die nachfolgend mit denselben Bezugsziffern versehen sind, wobei zur Verdeutlichung von teilweisen Unterschieden die Buchstaben "a" oder "b" hinzugefügt sind.

Man könnte die Schlauch-Kupplungsvorrichtungen 50a, 50b auch als Schlauchadapter bezeichnen. Die Schlauch-Kupplungsvorrichtungen 50a, 50b dienen zur Adaption beziehungsweise zur Kupplung eines Schlauches 53a, 53b mit der Hand-Werkzeugmaschine 10.

Der Schlauch 53b ist sozusagen eine Einfachversion, denn er enthält nur einen Druckluft-Schlauch 54, der eine Druckluft-Leitung 55 für die Druckluft D aufweist.

Der Schlauch 53a enthält ebenfalls einen Druckluft-Schlauch 54, der jedoch nicht freiliegt, sondern in einem Innenraum 56 eines Schlauchmantels 57, also eines äußeren Schlauches, angeordnet ist. Somit ist also ein Schlauch-in-Schlauch-Konzept realisiert, bei dem der innere Schlauch als Druckluft-Schlauch 54 ausgestaltet ist und die Druckluft D transportiert, während der äußere Schlauchmantel 57 quasi einen Staubluft-Schlauch 58 begrenzt. Die Staubluft S strömt durch den Staubluft-Schlauch 58 an dem Druckluft-Schlauch 54 vorbei.

Der Bediener muss also nur jeweils einen einzigen Schlauch 53a oder 53b an der Hand-Werkzeugmaschine 10 befestigen, um diese zu betreiben. Man könnte zumindest den Schlauch 53a auch als eine Schlauchanordnung bezeichnen, da nicht nur ein Schlauch vorhanden ist, sondern mehrere Schläuche, die zueinander konzentrisch sind.

An dieser Stelle sei bemerkt, dass selbstverständlich auch nebeneinander verlaufende Schläuche mit Hilfe eines erfindungsgemäßen Schlauchadapters beziehungsweise einer Schlauch-Kupplungsvorrichtung an der Hand-Werkzeugmaschine 10a befestigbar sind, wobei sich das gezeigte Konzept in der Praxis bewährt hat. Beispielsweise könnte ein Abluftschlauch parallel neben einem Druckluftschlauch verlaufen, wobei die Schläuche lose oder auch miteinander verbunden sein können, beispielsweise durch einen Verbindungssteg zwischen den einzelnen Schlauchteilen, durch Verbinder in der Art von Kabelbindern oder dergleichen.

Das in der Zeichnung dargestellte Konzept ist jedoch in der Handhabung sehr bequem. Auch die Anbindung beziehungsweise die Verbindung der Schlauch-Kupplungsvorrichtungen 50a oder 50b mit der Hand-Werkzeugmaschine 10 ist ergonomisch günstig gelöst, so dass der Bediener wahlweise beispielsweise nur einen Druckluft-Schlauch (Schlauch 53b) oder auch einen kombinierten Druckluft-Staubluft-Abfuhr-Schlauch (Schlauch 53a) mit Hilfe der jeweiligen Schlauch-Kupplungsvorrichtung 50b, 50a schnell mit der Hand-Werkzeugmaschine 10 verbinden kann und diese Verbindung auch schnell und effizient wieder löst.

Dabei ist auch für eine günstige, das Arbeiten mit der Hand-Werkzeugmaschine 10 erleichternde und das Arbeitsergebnis verbessernde Führung der Abluft A realisiert, was nachfolgend deutlich wird:
Während die Schläuche 53a, 53b beispielsweise aufgrund eines biegeflexiblen Materials (Gummi, Kunststoff oder dergleichen) sowie zweckmäßigerweise auch Verrippungen oder einer Rippenstruktur biegeflexibel sind, sind Kupplungsgehäuse 60a, 60b der Kupplungsvorrichtungen 50a, 50b verhältnismäßig biegesteif, beispielsweise aus einem Hart-Kunststoff, Metall oder dergleichen gefertigt. Die Kupplungsgehäuse 60a, 60b sind im Wesentlichen rohrförmig.

An den Kupplungsgehäusen 60a, 60b sind Halteringe 61a, 61b vorgesehen, die Bestandteile der Haltemittel 51 bilden. An den Halteringen 61a, 61b sind innenseitig die Bajonettkonturen 52 angeordnet, die zur bajonettartigen Verbindung mit den Gegen-Bajonettkonturen 35 des Maschinen-Anschlusses 26 vorgesehen sind. Die Halteringe 61a, 61b begrenzen umfangsseitig eine Steckaufnahme 62, in die der Anschlusskörper 34 eingesteckt werden kann beziehungsweise die auf den Anschlusskörper 34 aufsteckbar ist. Durch anschließendes Relativverdrehen der beiden Komponenten zueinander gelangen die Bajonettkonturen 52 mit den Gegen-Bajonettkonturen 35 in Eingriff.

Diese durch Drehung herstellbare oder lösbare Verbindung ist mit Hilfe eines Riegels 63 verriegelbar. Der Riegel 63 ist mittels eines in der Art einer Drucktaste oder Wippe betätigbaren Betätigüngsglieds 64 lösbar. Das Betätigungsglied 64 ist an einem Schwenkachselement 65 schwenkbar gelagert. Eine andeutungsweise sichtbare Feder 66 belastet den Riegel 63, beispielsweise über das Betätigungsglied 64, in Richtung seiner Verriegelungsstellung, so dass die Verbindung zwischen Hand-Werkzeugmaschine 10 und Schlauch-Kupplungsvorrichtung 50a, 50b nicht unabsichtlich entriegelt oder gelöst wird.

Der Haltering 61a ist über ein Drehlager 67 drehbar mit dem Kupplungsgehäuse 60a verbunden, so dass die Drehwinkelposition des Kupplungsgehäuses 60a zum Maschinen-Anschluss 26 erhalten bleibt, wenn der Haltering 61a vom Bediener zum Lösen oder Herstellen der Verbindung zwischen der Hand-Werkzeugmaschine 10 und der Kupplungsvorrichtung 50a relativ zum Kupplungsgehäuse 60a verdreht wird. Der Haltering 61b ist fest mit dem Kupplungsgehäuse 60b verbunden, das heißt, die Baueinheit wird als Ganzes relativ zum Maschinengehäuse 14 oder zum Maschinen-Anschluss 26 verdreht, um die Verbindung zwischen den beiden Bauteilen zu lösen oder herzustellen. Es versteht sich, dass der Haltering 61b und das Kupplungsgehäuse 60b auch einstückig sein können, was jedoch vorliegend nicht der Fall ist.

Zweckmäßigerweise erstreckt sich eine Aufnahme für das Schwenkachselement 65, um das das Betätigungsglied 64 schwenkt, in das Kupplungsgehäuse 60a oder 60b hinein, was für zusätzliche Stabilität sorgt, jedoch nicht notwendig ist.

Bei der vorgenannten Steckmontage oder Steck-Drehmontage des Anschlusskörpers 34 des Maschinen-Anschlusses 26 in die Schlauch-Kupplungsvorrichtung 50a, 50b, das heißt in die Steckaufnahme 62, optional bei einem Verdrehen der beiden Komponenten zueinander, um eine Verriegelung beziehungsweise einen formschlüssigen Halt aneinander zu erzielen, gelangen die Fluidöffnungen 27, 28 und 29 in Kommunikation mit ihnen zugeordneten Partien und Öffnungen an den Schlauch-Kupplungsvorrichtungen 50a, 50b. Dann liegt dem Maschinen-Druckluft-Einlass 27 ein Druckluft-Anschluss 68 der Schlauch-Kupplungsvorrichtung 50a, 50b zumindest im Wesentlichen druckdicht gegenüber, so dass die Druckluft D aus der Druckluft-Leitung 55 heraus über einen Druckluft-Kanal 69 des Kupplungsgehäuses 60a, 60b in den Maschinen-Druckluft-Einlass 27 hinein zum Motor 12 strömen kann.

Der Maschinen-Abluft-Auslass 28 liegt einem Abluft-Einlass 70 der Schlauch-Kupplungsvorrichtung 50a, 50b gegenüber, so dass die Abluft A aus dem Maschinengehäuse 14 heraus in den Abluft-Einlass 70 hineinströmen kann. Vom Abluft-Einlass 70 führt ein Abluftkanal 71 zu einer Abluftöffnung 72 direkt am Kupplungsgehäuse 60a, 60b.

Von der Schlauch-Kupplungsvorrichtung 50b wird die Staubluft S sozusagen gefangen und in den Schlauch 53a, genauer den Schlauchmantel 57, hineingeführt. Ebenfalls liegt ein Staubluft-Einlass 73a dem Maschinen-Staubluft-Auslass 29 gegenüber, so dass die mit Staub beladene Staubluft S über einen Staubluft-Kanal 74 des Kupplungsgehäuses 60a zu einem Staubluft-Auslass 75 strömen kann, der in Strömungsverbindung mit dem Schlauch 53b, insbesondere dem Innenraum des Schlauchmantels 57, also einem Staubluft-Schlauch 58, steht.

Durch die Schlauch-Kupplungsvorrichtung 50b hingegen wird der Maschinen-Staubluft-Auslass 29 sozusagen verschlossen. Sie weist nämlich einen beispielsweise einen stirnseitigen Staubluft-Verschluss 73b und/oder einen radialen Staubluft-Verschluss 73c auf, der zumindest im Wesentlichen dichtend dem Maschinen-Staubluft-Auslass 29 gegenüberliegt oder an einer anderen Stelle verschließt, so dass die Staubluft S nicht hinten aus dem Maschinengehäuse 14 heraus gelangen kann. Ein Außenumfang der Abluft-Anschlusspartie 32 liegt an einem Innenumfang des z.B. rohrförmigen radialen Staubluft-Verschlusses 73c an. Der radiale Staubluft-Verschluss 73c ist z.B. an einer Steckvertiefung 112 für die Abluft-Anschlusspartie 32 vorgesehen. Zudem ist vorteilhaft zwischen diesen Komponenten eine Dichtung 113 vorgesehen, z.B. an einem Innenumfang der Steckvertiefung 112, so dass dadurch eine noch bessere Dichtigkeit erzielt ist.

Der Druckluft-Schlauch 54 ist auf einen Anschlussstutzen 76a, 76b der Schlauch-Kupplungsvorrichtungen 50a, 50b aufgesteckt. Auf dem Anschlussstutzen 76a, der sozusagen als ein Rohrkörper ausgebildet ist, wird der Druckluft-Schlauch 54 durch eine Schelle 77 und mindestens eine Rippe 78 gehalten.

Dieselbe Maßnahme kann auch bei der Schlauch-Kupplungsvorrichtung 50b vorgesehen sein, wo der Druckluft-Schlauch 54 zum einen durch eine oder mehrere Rippen 78, zum anderen durch eine nicht dargestellte Schelle 77 (optional) gehalten werden kann. Selbstverständlich könnte man einen Druckluft-Schlauch auch ankleben oder verschweißen oder auch mit sonstigen, nicht dargestellten Klemmmaßnahmen befestigen, was jedoch hier nicht wesentlich ist. Vorteilhaft ist der Anschlussstutzen 76b zur Befestigung einer Schnellkupplung 115 am vorderen Ende des Druckluft-Schlauchs 54 ausgestaltet.

Jedenfalls sitzt der Druckluft-Schlauch 54 zumindest im Wesentlichen druckdicht auf dem Anschlussstutzen 76a, 76b. An seiner der Steckaufnahme 62 zugewandten Seite sind die Druckluft-Kanäle 69 mit Aufnahmegehäusen 79a, 79b eines Rückschlagventils 80 druckdicht verbunden. Beispielsweise hat das Aufnahmegehäuse 79a eine Aufnahme, in die der Anschlussstutzen 76a eingesteckt ist. Beim Aufnahmegehäuse 79b ist sozusagen ein umgekehrtes Prinzip realisiert, das heißt, der Anschlussstutzen 76b hat eine Aufnahme, in die das Aufnahmegehäuse 79b eingesteckt ist. Selbstverständlich können die Aufnahmegehäuse und Anschlussstutzen auch einstückig ausgebildet sein. An der der Steckaufnahme 62 für den Anschlusskörper 34 des Maschinen-Anschlusses 26 zugewandten Seite sind bei den Aufnahmegehäusen 79a, 79b Steckaufnahmen 81 ausgebildet, in die der Betätigungsvorsprung 31 der Druckluft-Anschlusspartie 30 einsteckbar ist, dies im Wesentlichen druckdicht. Beispielsweise sind an der Druckluft-Anschlusspartie 30 eine oder mehrere Ringdichtungen 37 vorgesehen (am Außenumfang), die am Innenumfang der Steckaufnahme 81 zu liegen kommen.

Die Rückschlagventile 80 weisen ein Ventilglied 82 auf, das durch anstehenden Druck der Druckluft D im Druckluft-Kanal 69 auf einen Ventilsitz 83 gedrückt wird. Das Ventilglied 82 ist beispielsweise kugelig oder als Kugel ausgestaltet. Der Betätigungsvorsprung 31 hebt das Ventilglied 82 vom Ventilsitz 83 ab, so dass die Druckluft am Ventilglied 82 vorbei in den Maschinen-Druckluft-Einlass 27 einströmen kann.

Die Anschlussstutzen 76a, 76b werden von Haltekörpern 84a, 84b gehalten, die jeweils Durchgangsöffnungen für Luft haben, z.B. für die Staubluft S und/oder für die Abluft A.

Der Haltekörper 84a dient zur direkten beziehungsweise indirekten Abstützung am Kupplungsgehäuse 60a. Die Stützvorsprünge 85, 86 können an ihrem Außenumfang beispielsweise ringförmig sein. Der Stützvorsprung 86 ist im Bereich einer Schlauchaufnahme 87 angeordnet, derart, dass er sich mit seinen radial äußeren Anlagebereichen am in die Schlauchaufnahme 87 eingesteckten Staubluft-Schlauch 58, das heißt am Innenumfang des Schlauchmantels 57, abstützt. Die Schlauchaufnahme 87 kann beispielsweise Verrippungen aufweisen, an denen sich Rippen des Schlauchmantels 57 zumindest im Wesentlichen formschlüssig abstützen können. Jedenfalls drückt der Stützvorsprung 85 den Schlauchmantel 57 an den Innenumfang der Schlauchaufnahme 87, so dass dieser dort zugfest gehalten wird. Selbstverständlich könnte der Staubluft-Schlauch 58 auch anderweitig oder zusätzlich befestigt sein, beispielsweise verklebt oder verschweißt. Auch zusätzliche Klemmen, Schellen oder dergleichen sind möglich.

Der Stützvorsprung 85 und der Stützvorsprung 86 haben Durchgangsöffnungen 88, beispielsweise um 90° drehwinkelversetzt zur Schnittebene B-B, durch die die Abluft A strömen kann.

In dieser Ebene hat auch ein Steckaufnahmekörper 89a, an dem die Steckaufnahme 81 für den Anschlusskörper 34 des Maschinen-Anschlusses 26 vorgesehen ist, eine Durchgangsöffnung 88 oder mehrere Durchgangsöffnungen 88 an seinem Boden 90. Die Abluftkanäle 71 erstrecken sich also vom Boden 90 durch die Durchgangsöffnungen 88 hindurch bis zum Innenraum 56 des Staubluft-Schlauches 58. Die Staubluft S strömt also durch das Kupplungsgehäuse 60a hindurch in den Staubluft-Schlauch 58 hinein.

Bei einem Steckaufnahmekörper 89b der Schlauch-Kupplungsvorrichtung 50b hingegen liegt der Staubluft-Auslass 29 am Boden 90 an. An dem Boden 90 ist beispielsweise eine Dichtung 91 vorgesehen, die den Maschinen-Staubluft-Auslass 29 stirnseitig dichtend verschließt.

Zur Führung der Abluft A sind jedoch bei den Schlauch-Kupplungsvorrichtungen 50a, 50b vorteilhafte, erfindungsgemäße Maßnahmen getroffen: Die Abluft A strömt von den Abluft-Einlässen 70 her durch Schalldämpfer 92a, 92b zu den Abluftöffnungen 72 der Schlauch-Kupplungsvorrichtungen 50a, 50b. Somit erfährt die Abluft A eine Schalldämpfung. Die Strömungsführung ist jedoch bei den Schlauch-Kupplungsvorrichtungen 50a, 50b verschieden gelöst.

Bei der Schlauch-Kupplungsvorrichtung 50a strömt die Abluft A von der Seite des Bodens 90 der Steckaufnahme 62 in den den Druckluft-Anschluss 68 ringförmig umgebenden Abluft-Einlass 70 ein. Dann erfährt die Abluft A eine Richtungsumkehr, das heißt, sie strömt nach radial außen durch den als Ringschalldämpfer ausgestalteten Schalldämpfer 92. Der Schalldämpfer 92 umfasst nämlich einen Ringkörper 93a aus schalldämpfendem Material, der von einem Haltekörper 94 gehalten wird. Der Haltekörper 94, der ebenfalls ringförmig ist, ist zwischen zwei Stützkörpern 95, 96 angeordnet, die sich mit ihrem radialen Außenumfang wiederum an einem Rohrkörper 97 des Kupplungsgehäuses 60a abstützen. Die Stützkörper 95, 96 sind ringförmig ausgestaltet. Der Stützkörper 95 hält zudem den Steckaufnahmekörper 89b, an dessen Außenumfang das Drehlager 67 angeordnet ist. Es versteht sich, dass das Drehlager 67 auch am Außenumfang beispielsweise des Rohrkörpers 97 angeordnet sein könnte.

An einem dem Stützkörper 96 zugewandten Ringabschnitt 98 des Haltekörpers 94 sowie am Stützkörper 96 selbst sind Durchgangsöffnungen 99 vorgesehen, durch die die Abluft A in Richtung des Schlauches 53a strömen kann.

Am Innenumfang des Stützkörpers 96 ist die Schlauchaufnahme 87 ausgebildet. An diesem Innenumfang sind beispielsweise Stütz- und/oder Halterippen für Rippen des Staubluft-Schlauches 58 vorgesehen. Der Staubluft-Schlauch 58 ist zwischen dem Haltekörper 94 und in den Stützkörper 96 aufgenommen, insbesondere geklemmt, so dass er dort zug- und/oder druckfest bzw. schubfest festgehalten wird.

Aus den Durchgangsöffnungen 99 des Stützkörpers 96 strömt die Abluft A nach hinten in Richtung des Schlauches 53a. Die Abluft A strömt dabei am Außenumfang des Schlauchmantels 57 entlang. Ein hinterer, den Schlauchmantel 57 mit Abstand umgebender Führungsabschnitt 100 des Rohrkörpers 97 führt dabei die Abluft A und hält sie zunächst im Bereich des Außenumfangs des Schlauchmantels 57, so dass die Abluft A möglichst weit weg vom Maschinengehäuse 14 in die Umgebung strömt. Eine den Handgriffabschnitt 24 umgreifende Hand eines Bedieners wird also von der Abluft A nicht angeblasen.

Eine zweckmäßige Maßnahme sieht zudem vor, dass der strömungsabseitige Stützkörper 96 einen Führungsabschnitt 101 aufweist, beispielsweise einen ringförmigen Führungsabschnitt 101, der sich zwischen dem Außenumfang des Schlauchmantels 57 und dem Führungsabschnitt 100 des Rohrkörpers 97 erstreckt, vorzugsweise zu beiden radial inneren und radial äußeren Komponenten jeweils mit einem Abstand, so dass durch die so gebildeten Ringbereiche jeweils Abluft A strömen kann.

Zweckmäßigerweise sind bei einer erfindungsgemäßen Schlauch-Kupplungsvorrichtung auch Verwirbelungsstrukturen, Labyrinthstrukturen oder dergleichen zur Führung der Abluft A beziehungsweise deren Verwirbelung vorgesehen. So hat beispielsweise der Führungsabschnitt 101 Rippen und Durchgangsöffnungen, die insgesamt Verwirbelungsstrukturen oder Verwirbelungskonturen 102 bilden. Die Abluft A wird dadurch abgebremst, bevor sie nach hinten durch die Abluftöffnung 72 aus dem Kupplungsgehäuse 60b ausströmt.

Zum Auswechseln des Schalldämpfers 92a, beispielsweise bei Verschleiß oder wenn anstelle des Schalldämpfers ein Filter oder ein anderer Schalldämpfer gewünscht ist, muss lediglich der Rohrkörper 97 entfernt werden. Der vom Haltekörper 94 gehaltene Ringkörper 93a, das heißt der Schalldämpfer 92a als Ganzes, kann dann aus dem Kupplungsgehäuse 60a entnommen werden, wo er geschützt vor Umwelteinflüssen (abgesehen von der durchströmenden Abluft A) untergebracht ist.

Auch der Schalldämpfer 92b kann leicht ausgewechselt werden. Auch er ist als ein Modul ausgestaltet.

Die Wirkung der Schalldämpfer 92a und 92b wird vorteilhaft durch mindestens einen, optionalen, im Maschinengehäuse 14, z.B. am Auslass des Motors 12, am Abluft-Auslass 28 oder dergleichen, angeordneten Schalldämpfer 38 und/oder 39 verbessert.

Der Steckaufnahmekörper 89b hat einen Schraubvorsprung 103, an dem der Anschlussstutzen 76b angeordnet ist. Der Anschlussstutzen 76b steht vor den Schraubvorsprung 103 vor. Somit bildet also der Steckaufnahmekörper 89b, jedenfalls im Bereich seines Schraubvorsprungs 103, den Haltekörper 84b.

Einen zusätzlichen Halt erfährt der Anschlussstutzen 76b durch eine Mutter 104, die auf den Schraubvorsprung 103 aufgeschraubt ist. Die Mutter 104 hat eine zentrale Durchgangsöffnung 105, die vom Anschlussstutzen 76b durchdrungen ist. Beispielsweise ist eine Dichtung 106 zwischen dem Anschlussstutzen 76b und der Durchgangsöffnung 105 angeordnet, so dass die beiden Komponenten druckdicht aneinander anliegen. Die Abluftöffnungen 72 erstrecken sich ringförmig um die Durchgangsöffnung 105 beziehungsweise um den Anschlussstutzen 76b. Somit strömt die Abluft A also nach stirnseitig hinten aus dem Kupplungsgehäuse 60b heraus. Die Abluftöffnungen 72 sind sozusagen Öffnungen eines Gitters. Zwischen einem Innenringabschnitt 109, an dem die Durchgangsöffnung 105 vorgesehen ist, und einem Außenringabschnitt 108 erstrecken sich nämlich etwa radial verlaufende Haltestege 107. Am Außenringabschnitt 108 sind zweckmäßigerweise Griffkonturen 110 vorgesehen, so dass die Mutter 104 bequem ergriffen und gedreht werden kann.

Der Schalldämpfer 92b umfasst einen Ringkörper 93b, der in einer Schalldämpferaufnahme 111 aufgenommen ist. Die Schalldämpferaufnahme 111 ist zwischen den Haltestegen 107 und einer Stirnseite des Schraubvorsprungs 103 ausgebildet. Somit kann der Ringkörper 93b leicht ausgewechselt werden, indem nämlich einfach die Mutter 104 vom Schraubvorsprung 103 abgeschraubt werden kann, so dass ein Bediener den Ringkörper 93b, der beispielsweise aus Textilgewebe, Gewirk oder dergleichen besteht, aus der Schalldämpferaufnahme 111 entnehmen kann.

Zweckmäßigerweise sind die Außenumfänge der Schlauch-Kupplungsvorrichtungen 50a, 50b etwa konturgleich. Beispielsweise ist der Haltering 61a im Übergangsbereich zum Rohrkörper 97 etwa konturgleich mit demselben. Auch der Haltering 61b ist im Übergangsbereich zur Mutter 104 etwa konturgleich mit derselben.

Am Boden 90 der Steckaufnahme 62 ist die Steckvertiefung 112 vorgesehen, in die die Abluft-Anschlusspartie 32 einsteckbar ist. An einem Innenumfang der Steckvertiefung 112 kann eine Dichtung 113 vorgesehen sein, so dass eine gewisse Druckdichtigkeit für die Abluft A geschaffen ist.

Weiterhin kann im Bereich der Steckaufnahme 62 eine Federanordnung 114 vorgesehen sein, die den Anschlusskörper 34 aus der Steckaufnahme 62 heraus beaufschlagt, derart, dass die Gegen-Bajonettkonturen 35 gegen die Bajonettkonturen 52 gedrückt werden. Beispielsweise ist als Federanordnung 114 ein Tellerfederpaket vorgesehen, wobei selbstverständlich auch eine Schraubenfeder oder einzelne andere Federn ohne weiteres möglich sind.

## Patentansprüche

1. Schlauch-Kupplungsvorrichtung zum Ankuppeln eines eine Druckluft-Leitung (55) enthaltenden Schlauchs (53a; 53b) an einen Maschinen-Anschluss (26) einer pneumatischen Hand-Werkzeugmaschine (10), wobei der Maschinen-Anschluss (26) einen Maschinen-Druckluft-Einlass (27) zur Druckluft-Versorgung eines pneumatischen Motors (12) der Hand-Werkzeugmaschine (10) und einen Maschinen-Abluft-Auslass (28) für von dem pneumatischen Motor (12) wegströmende Abluft (A) umfasst, wobei die Schlauch-Kupplungsvorrichtung (50a; 50b) ein Kupplungsgehäuse (60a; 60b) mit Haltemitteln (51) aufweist, die mit Gegenhaltemitteln (36) des Maschinen-Anschlusses (26) in Eingriff bringbar sind, so dass ein mit der Druckluft-Leitung (55) über einen Druckluft-Kanal (69) kommunizierender Druckluft-Anschluss (68) der Schlauch-Kupplungsvorrichtung (50a; 50b) mit dem Maschinen-Druckluft-Einlass (27) des Maschinen-Anschlusses (26) verbunden ist, wobei an dem Kupplungsgehäuse (60a; 60b) ein Abluftkanal (71a; 71b) mit einer Abluftöffnung (72a; 72b) und einem Abluft-Einlass (70) vorhanden ist, der mit dem Maschinen-Abluft-Auslass (28) in Strömungsverbindung steht, wenn die Schlauch-Kupplungsvorrichtung (50a; 50b) mit dem Maschinen-Anschluss (26) verbunden ist, **dadurch gekennzeichnet, dass** sie einen Staubluft-Verschluss (73b, 73c) oder einen Staubluft-Kanal (74) für einen zum Wegführen von mit Staub beladener Staubluft (S) von der Hand-Werkzeugmaschine (10) vorgesehenen Maschinen-Staubluft-Auslass (29) des Maschinen-Anschlusses (26) aufweist, wobei der Staubluft-Verschluss (73b, 73c) oder ein Staubluft-Einlass (73a) des Staubluft-Kanals (74) vor dem Maschinen-Staubluft-Auslass (29) des Maschinen-Anschlusses (26) angeordnet ist, wenn die Schlauch-Kupplungsvorrichtung (50a; 50b) mit dem Maschinen-Anschluss (26) verbunden ist.

2. Schlauch-Kupplungsvorrichtung nach Anspruch 1, **dadurch gekennzeichnet, dass** sie einen Schalldämpfer (90a; 90b) und/oder einen Filter aufweist, über den die Abluft (A) aus dem Kupplungsgehäuse (60a; 60b) ausströmt.

3. Schlauch-Kupplungsvorrichtung nach Anspruch 2, **dadurch gekennzeichnet, dass** der Schalldämpfer (90a; 90b) oder der Filter von dem Druckluft-Kanal (69) der Schlauch-Kupplungsvorrichtung (50a; 50b) insbesondere zentral durchsetzt ist.

4. Schlauch-Kupplungsvorrichtung nach Anspruch 2 oder 3, **dadurch gekennzeichnet, dass** der Schalldämpfer (90a; 90b) oder der Filter als ein auswechselbares Modul oder eine auswechselbare Patrone ausgestaltet ist und/oder ein durch ein Gitter gehaltenes flexibles Gewebe oder Gewirk umfasst und/oder einen Haltekörper (94) umfasst, der lösbar an dem Kupplungsgehäuse (60a; 60b) befestigbar ist und ein flexibles Gewebe oder Gewirk hält und/oder in einem Innenraum des Kupplungsgehäuses (60a; 60b) angeordnet ist.

5. Schlauch-Kupplungsvorrichtung nach einem der vorhergehenden Ansprüche, **dadurch gekennzeichnet, dass** zur Führung der Abluft (A) von einem Maschinengehäuse (14) der Hand-Werkzeugmaschine (10) weg die Abluftöffnung (72a; 72b) in Richtung des Schlauches (53a; 53b) orientiert ist und/oder der Abluftkanal (71a; 71b) entlang eines vorderen, an der Schlauch-Kupplungsvorrichtung (50a; 50b) angeordneten Abschnittes des Schlauches (53a; 53b) verläuft und/oder das Kupplungsgehäuse (60a; 60b) einen ringförmigen, von dem Schlauch (53a; 53b) durchsetzten Abluftführungsabschnitt aufweist.

6. Schlauch-Kupplungsvorrichtung nach einem der vorhergehenden Ansprüche, **dadurch gekennzeichnet, dass** der Druckluft-Anschluss (68) und der Staubluft-Einlass (73a) des Staubluft-Kanals (74) oder der Staubluft-Verschluss (73b, 73c) der Schlauch-Kupplungsvorrichtung (50a; 50b) und/oder die Abluftöffnung (72a; 72b) konzentrisch sind.

7. Schlauch-Kupplungsvorrichtung nach einem der vorhergehenden Ansprüche, **dadurch gekennzeichnet, dass** der Druckluft-Anschluss (68) und die Abluftöffnung (72a; 72b) konzentrisch sind.

8. Schlauch-Kupplungsvorrichtung nach einem der vorhergehenden Ansprüche, **dadurch gekennzeichnet, dass** der Schlauch (53a) einen äußeren Schlauchmantel (57) zur Führung der Staubluft (S) und einen in einem Innenraum (56) des Schlauchmantels (57) angeordneten Druckluft-Schlauch (54) aufweist, in dem die Druckluft-Leitung (55) ausgebildet ist, und dass der Druckluft-Anschluss (68) in einem Innenraum einer zum Anschluss des Schlauchmantels (57) vorgesehenen Schlauchaufnahme (87) der Schlauch-Kupplungsvorrichtung (50a) angeordnet ist.

9. Schlauch-Kupplungsvorrichtung nach einem der vorhergehenden Ansprüche, **dadurch gekennzeichnet, dass** der Abluftkanal (71a) des Kupplungsgehäuses (60a) als Ganzes oder mindestens ein Abschnitt des Abluftkanals (71a) an dem Staubluft-Kanal (74), insbesondere von radial innen nach radial außen, vorbei verläuft.

10. Schlauch-Kupplungsvorrichtung nach einem der vorhergehenden Ansprüche, **dadurch gekennzeichnet, dass** der Druckluft-Anschluss (68) ein durch in der Druckluft-Leitung (55) anstehenden Druck verschließbares Ventilglied (82) aufweist, das durch eine den Maschinen-Druckluft-Einlass (27) aufweisende Partie (30) des Maschinen-Anschlusses (26) öffenbar ist.

11. Schlauch-Kupplungsvorrichtung nach einem der vorhergehenden Ansprüche, **dadurch gekennzeichnet, dass** die Haltemittel (51) ein Schraubgewinde und/oder Bajonettkonturen (52) zur Verbindung mit Gegen-Schraubkonturen oder Gegen-Bajonettkonturen (35) der Gegenhaltemittel (36) des Maschinen-Anschlusses (26) und/oder mindestens einen Ring (61a; 61b) umfassen, der drehbar Kupplungsgehäuse (60a; 60b) gelagert ist.

12. Schlauch-Kupplungsvorrichtung nach einem der vorhergehenden Ansprüche, **dadurch gekennzeichnet, dass** sie mit dem Schlauch (53a; 53b) verbunden ist, wobei der Schlauch (53a; 53b) vorzugsweise eine Abzweigung aufweist, an der die Druck-luft-Leitung (55) aus einem Innenraum (56) des Schlauches (53a; 53b) herausgeführt ist.

13. Hand-Werkzeugmaschine (10) mit einer Schlauch-Kupplungsvorrichtung (50a; 50b) nach einem der vorhergehenden Ansprüche, wobei die Hand-Werkzeugmaschine (10) einen Maschinen-Anschluss (26) mit einem Maschinen-Druckluft-Einlass (27) zur Druckluft-Versorgung eines pneumatischen Motors (12) der Hand-Werkzeugmaschine (10) und einen Maschinen-Abluft-Auslass (28) für von dem pneumatischen Motor (12) wegströmende Abluft (A) umfasst.

14. Hand-Werkzeugmaschine (10) nach Anspruch 13, **dadurch gekennzeichnet, dass** sie mindestens einen der Schlauch-Kupplungsvorrichtung (50a; 50b) vorgelagerten Abluft-Schalldämpfer (38, 39) aufweist.

## Claims

1. Hose coupling device for coupling a hose (53a; 53b) containing a compressed air line (55) to a machine port (26) of a pneumatic hand-operated machine tool (10), wherein the machine port (26) comprises a machine compressed air inlet (27) for the compressed air supply of a pneumatic motor (12) of the hand-operated machine tool (10) and a machine exhaust air outlet (28) for exhaust air (A) flowing away from the pneumatic motor (12), wherein the hose coupling device (50a; 50b) comprises a coupling housing (60a; 60b) with holding means (51), which can be brought into engagement with mating holding means (36) of the machine port (26), so that a compressed air connection (68) of the hose coupling device (50a; 50b), which communicates with the compressed air line (55) via a compressed air passage (69), is connected to the machine compressed air inlet (27) of the machine port (26), wherein the coupling housing (60a; 60b) is provided with an exhaust air passage (71 a; 71b) with an exhaust air opening (72a; 72b) and an exhaust air inlet (70), which is in flow-connection with the machine exhaust air outlet (28) when the hose coupling device (50a; 50b) is connected to the machine port (26), **characterised in that** it comprises a dust air lock (73b, 73c) or a dust air passage (74) for a machine dust air outlet (29) of the machine port (26) provided for removing dust-loaded dust air (S) from the hand-operated machine tool (10), wherein the dust air lock (73b, 73c) or a dust air inlet (73a) of the dust air passage (74) is located in front of the machine dust air outlet (29) of the machine port (26) when the hose coupling device (50a; 50b) is connected to the machine port (26).

2. Hose coupling device according to claim 1, **characterised in that** it comprises a silencer (90a; 90b) and/or a filter, via which the exhaust air (A) flows out of the coupling housing (60a; 60b).

3. Hose coupling device according to claim 2, **characterised in that** the compressed air passage (69) of the hose coupling device (50a; 50b) passes through the silencer (90a; 90b) or the filter, in particular centrally.

4. Hose coupling device according to claim 2 or 3, **characterised in that** the silencer (90a; 90b) or the filter is designed as a replaceable module or cartridge and/or comprises a flexible woven or knitted fabric held by a grid and/or comprises a holding body (94), which can be releasably secured to the coupling housing (60a; 60b) and holds a flexible woven or knitted fabric, and/or is located in an interior of the coupling housing (60a; 60b).

5. Hose coupling device according to any of the preceding claims, **characterised in that**, for routing the exhaust air (A) away from a machine housing (14) of the hand-operated machine tool (10), the exhaust air opening (72a; 72b) is oriented in the direction of the hose (53a; 53b), and/or **in that** the exhaust air passage (71a;71b) extends along a front section of the hose (53a; 53b) located on the hose coupling device (50a; 50b), and/or **in that** the coupling housing (60a; 60b) comprises an exhaust air ducting section through which the hose (53a; 53b) passes.

6. Hose coupling device according to any of the preceding claims, **characterised in that** the compressed air connection (68) and the dust air inlet (73a) of the dust air passage (74) or the dust air lock (73b, 73c) of the hose coupling device (50a; 50b) and/or the exhaust air opening (72a; 72b) are concentric.

7. Hose coupling device according to any of the preceding claims, **characterised in that** the compressed air connection (68) and the exhaust air opening (72a; 72b) are concentric.

8. Hose coupling device according to any of the preceding claims, **characterised in that** the hose comprises an outer hose sheath (57) for carrying the dust air (S) and a compressed air hose (54) located in an interior (56) of the hose sheath (57), in which the compressed air line (55) is formed, and **in that** the compressed air connection (68) is located in an interior of a hose receptacle (87) of the hose coupling device (50a), which is provided for connecting the hose sheath (57).

9. Hose coupling device according to any of the preceding claims, **characterised in that** the whole of the exhaust air passage (71a) of the coupling housing (60a) or at least a section of the exhaust air passage (71 a) runs past the dust air passage (74), in particular from radially inside to radially outside.

10. Hose coupling device according to any of the preceding claims, **characterised in that** the compressed air connection (68) comprises a valve member (82), which can be closed by the pressure in the compressed air line (55) and which can be opened by a section (30) of the machine port (26) which comprises the machine compressed air inlet (27).

11. Hose coupling device according to any of the preceding claims, **characterised in that** the holding means (51) comprise a screw thread and/or bayonet contours (52) for connection to mating screw threads or mating bayonet contours (35) of the mating holding means (36) of the machine port (26) and/or at least one ring (60a; 60b), which is rotatably mounted on the coupling housing (60a; 60b).

12. Hose coupling device according to any of the preceding claims, **characterised in that** it is connected to the hose (53a; 53b), the hose (53a; 53b) preferably having a branch where the compressed air line (55) is routed out of an interior (56) of the hose (53a; 53b).

13. Hand-operated machine tool (10) with a hose coupling device (50a; 50b) according to any of the preceding claims, wherein the hand-operated machine tool (10) comprises a machine port (26) with a machine compressed air inlet (27) for the compressed air supply of a pneumatic motor (12) of the hand-operated machine tool (10) and a machine exhaust air outlet (28) for exhaust air (A) flowing away from the pneumatic motor (12).

14. Hand-operated machine tool (10) according to claim 13, **characterised in that** it comprises at least one exhaust air silencer (38, 39) located upstream of the hose coupling device (50a; 50b).

## Revendications

1. Dispositif d'accouplement de tuyau flexible servant à accoupler un tuyau flexible (53a ; 53b) contenant un conduit d'air comprimé (55) à un raccord de machine (26) d'une machine-outil manuelle (10) pneumatique, sachant que le raccord de machine (26) comprend une entrée d'air comprimé de machine (27) servant à alimenter en air comprimé un moteur (12) pneumatique de la machine-outil manuelle (10) et une sortie d'air vicié de machine (28) pour le flux d'air vicié (A) quittant le moteur (12) pneumatique, sachant que le dispositif d'accouplement de tuyau flexible (50a ; 50b) présente un boîtier d'accouplement (60a ; 60b) pourvu de moyens de maintien (51), qui peuvent venir en prise avec des moyens de maintien complémentaires (36) du raccord de machine (26) de sorte qu'un raccord d'air comprimé (68), communiquant avec le conduit d'air comprimé (55) par l'intermédiaire d'un canal d'air comprimé (69), du dispositif d'accouplement de tuyau flexible (50a ; 50b) est relié à l'entrée d'air comprimé de machine (27) du raccord de machine (26), sachant qu'un canal d'air vicié (71a; 71b) pourvu d'une ouverture d'air vicié (72a ; 72b) et d'une entrée d'air vicié (70) est présent au niveau du boîtier d'accouplement (60a ; 60b), lequel est en liaison fluidique avec la sortie d'air vicié de machine (28) lorsque le dispositif d'accouplement de tuyau flexible (50a ; 50b) est relié au raccord de machine (26), **caractérisé en ce que** le dispositif d'accouplement de tuyau flexible présente un système de fermeture d'air chargé de poussières (73b, 73c) ou un canal d'air chargé de poussières (74) pour une sortie d'air chargé de poussières de machine (29), prévue aux fins de l'évacuation de l'air chargé de poussières (S) de la machine-outil manuelle (10), du raccord de machine (26), sachant que le système de fermeture d'air chargé de poussières (73b, 73c) ou qu'une entrée d'air chargé de poussières (73a) du canal d'air chargé de poussières (74) est disposée(e) avant la sortie d'air chargé de poussières de machine (29) du raccord de machine (26) lorsque le dispositif d'accouplement de tuyau flexible (50a ; 50b) est relié au raccord de machine (26).

2. Dispositif d'accouplement de tuyau flexible selon la revendication 1, **caractérisé en ce qu'**il présente un silencieux (90a ; 90b) et/ou un filtre, par l'intermédiaire duquel le flux d'air vicié (A) sort du boîtier d'accouplement (60a ; 60b).

3. Dispositif d'accouplement de tuyau flexible selon la revendication 2, **caractérisé en ce que** le silencieux (90a ; 90b) ou le filtre est traversé en particulier au centre par le canal d'air comprimé (69) du dispositif d'accouplement de tuyau flexible (50a ; 50b).

4. Dispositif d'accouplement de tuyau flexible selon la revendication 2 ou 3, **caractérisé en ce que** le silencieux (90a ; 90b) ou le filtre est configuré sous la forme d'un module remplaçable ou d'une cartouche remplaçable et/ou comprend un tissu ou un tricot flexible maintenu par une grille et/ou comprend un corps de maintien (94), qui peut être fixé de manière amovible au niveau du boîtier d'accouplement (60a ; 60b) et qui maintient un tissu ou un tricot flexible et/ou qui est disposé dans un espace intérieur du boîtier d'accouplement (60a ; 60b).

5. Dispositif d'accouplement de tuyau flexible selon l'une quelconque des revendications précédentes, **caractérisé en ce qu'**aux fins de l'acheminement de l'air vicié (A) quittant un boîtier de machine (14) de la machine-outil manuelle (10), l'ouverture d'air vicié (72a ; 72b) est orientée dans la direction du tuyau flexible (53a ; 53b), et/ou **en ce que** le canal d'air vicié (71a ; 71b) s'étend le long d'un tronçon avant du tuyau flexible (53a; 53b) disposé au niveau du dispositif d'accouplement de tuyau flexible (50a ; 50b) et/ou **en ce que** le boîtier d'accouplement (60a ; 60b) présente un tronçon d'acheminement d'air vicié de forme annulaire traversé par le tuyau flexible (53a ; 53b).

6. Dispositif d'accouplement de tuyau flexible selon l'une quelconque des revendications précédentes, **caractérisé en ce que** le raccord d'air comprimé (68) et l'entrée d'air chargé de poussières (73a) du canal d'air chargé de poussières (74) ou le système de fermeture d'air chargé de poussières (73b, 73c) du dispositif d'accouplement de tuyau flexible (50a ; 50b) et/ou l'ouverture d'air vicié (72a ; 72b) sont concentriques.

7. Dispositif d'accouplement de tuyau flexible selon l'une quelconque des revendications précédentes, **caractérisé en ce que** le raccord d'air comprimé (68) et l'ouverture d'air vicié (72a ; 72b) sont concentriques.

8. Dispositif d'accouplement de tuyau flexible selon l'une quelconque des revendications précédentes, **caractérisé en ce que** le tuyau flexible (53a) présente une gaine de tuyau flexible (57) extérieure servant à acheminer l'air chargé de poussières (S) et un tuyau flexible d'air comprimé (54) disposé dans un espace intérieur (56) de la gaine de tuyau flexible (57), dans lequel est réalisé le conduit d'air comprimé (55), et **en ce que** le raccord d'air comprimé (68) est disposé dans un espace intérieur d'un logement de tuyau flexible (87), prévu aux fins du raccord de la gaine de tuyau flexible (57), du dispositif d'accouplement de tuyau flexible (50a).

9. Dispositif d'accouplement de tuyau flexible selon l'une quelconque des revendications précédentes, **caractérisé en ce que** le canal d'air vicié (71a) du boîtier d'accouplement (60a) s'étend, comme un tout ou comme au moins un tronçon du canal d'air vicié (71 a) le long du canal d'air chargé de poussières (74), en particulier de l'intérieur radialement vers l'extérieur radialement.

10. Dispositif d'accouplement de tuyau flexible selon l'une quelconque des revendications précédentes, **caractérisé en ce que** le raccord d'air comprimé (68) présente un organe de soupape (82) pouvant être fermé par la pression régnant dans le conduit d'air comprimé (55), lequel organe de soupape peut être ouvert par une partie (30), présentant l'entrée d'air comprimé de machine (27), du raccord de machine (26).

11. Dispositif d'accouplement de tuyau flexible selon l'une quelconque des revendications précédentes, **caractérisé en ce que** les moyens de maintien (51) comprennent un filetage vissé et/ou des contours à baïonnettes (52) destinés à être reliés à des contours vissés complémentaires ou à des contours à baïonnettes complémentaires (35) des moyens de maintien complémentaires (36) du raccord de machine (26) et/ou au moins une bague (61 a; 61 b), qui est montée de manière à pouvoir tourner dans le boîtier d'accouplement (60a ; 60b).

12. Dispositif d'accouplement de tuyau flexible selon l'une quelconque des revendications précédentes, **caractérisé en ce qu'**il est relié au tuyau flexible (53a ; 53b), sachant que le tuyau flexible (53a ; 53b) présente de préférence un embranchement, au niveau duquel le conduit d'air comprimé (55) est guidé hors d'un espace intérieur (56) du tuyau flexible (53a ; 53b).

13. Machine-outil manuelle (10) comprenant un dispositif d'accouplement de tuyau flexible (50a ; 50b) selon l'une quelconque des revendications précédentes, sachant que la machine-outil manuelle (10) comprend un raccord de machine (26) pourvu d'une entrée d'air comprimé de machine (27) servant à alimenter en air comprimé un moteur (12) pneumatique de la machine-outil manuelle (10) et une sortie d'air vicié de machine (28) pour le flux d'air vicié (A) quittant le moteur (12) pneumatique.

14. Machine-outil manuelle (10) selon la revendication 13, **caractérisée en ce qu'**elle présente au moins un silencieux d'air vicié (38, 39) monté en amont du dispositif d'accouplement de tuyau flexible (50a ; 50b).
